# EUROPEAN PATENT APPLICATION

(11) **EP 2 320 103 A1**
(43) Date of publication of application: **11.05.2011**
(21) Application number: 09806622.8
(22) Date of filing: 13.07.2009
(51) Int. Cl.: F16D 3/20, F16D 3/224

(54) **CAGE FOR UNIFORM-MOTION UNIVERSAL JOINT AND UNIFORM-MOTION UNIVERSAL JOINT**

(30) Priority: 11.08.2008 JP 2008207119
(71) Applicant: NTN Corporation, Osaka-shi, Osaka 550-0003 (JP)
(72) Inventor: OOBA, Hirokazu, Iwata-shi Shizuoka 438-0037 (JP); YOSHIDA, Kazuhiko, Iwata-shi Shizuoka 438-0037 (JP); SONE, Keisuke, Iwata-shi Shizuoka 438-0037 (JP); ITOU, Kiyohiro, Iwata-shi Shizuoka 438-0037 (JP)
(74) Representative: Grünecker, Kinkeldey, Stockmair & Schwanhäusser Anwaltssozietät
(86) International application number: PCT/JP2009/062654
(87) International publication number: WO 2010/018726

(57) **Abstract**

To achieve both cost reduction and strength enhancement of a cage by appropriately managing, at the time of forming pockets through a punch-pressing process in a base material made of medium-carbon steel, a size of a secondary fracture portion formed in a shear surface of the base material. Provided is a cage (5) for a constant velocity universal joint, the cage being formed by forming, in a peripheral direction of a cylindrical base material (6) made of medium-carbon steel, pockets (5c) for accommodating torque transmission balls (4) through a punch-pressing process, and hardening the entire base material (6) through quenching, the cage (5) including a shear surface (5c2) left in at least part of each of the pockets (5c) as a result of the punch-pressing process, the shear surface (5c2) including a secondary fracture portion (7) that is formed therein at a time of the punch-pressing process and exhibits a wedge-like shape in cross-section orthogonal to the shear surface (5c2), in which, in the secondary fracture portion (7) in the cross-section orthogonal to the shear surface (5c2), a segment (AB) is 1.0 mm or less in a case where a secondary-fracture distal end portion is represented by A and a foot of a perpendicular from the secondary-fracture distal end portion to the shear surface (5c2) is represented by B.

## Description

### Technical Field

The present invention relates to, for example, a constant velocity universal joint used in a power transmission mechanism for automobiles or various industrial machines, for transmitting rotational torque mutually between an outer joint member and an inner joint member. The present invention also relates to a cage which is one of components of the constant velocity universal joint.

### Background Art

The constant velocity universal joint includes, as main components, an outer joint member, an inner joint member, torque transmission balls, and a cage. In each of an inner peripheral surface of the outer joint member and an outer peripheral surface of the inner joint member, there are formed track grooves extending in an axial direction. Under a state of being incorporated one-by-one between the track grooves of the outer joint member and the track grooves of the inner joint member which are in pairs, the torque transmission balls are each rollably accommodated in a pocket formed in a peripheral direction of the cage.

Generally, with use of a cylindrical base material made of case-hardened steel which is low-carbon steel, the cage is manufactured as follows. That is, an outer peripheral surface and an inner peripheral surface of the base material are respectively formed into a spherical outer peripheral surface and a spherical inner peripheral surface through turning or rolling, and then, a plurality of pockets are formed in a peripheral direction through a punch-pressing process on the base material. Next, a surface of the base material is hardened through heat treatment of carburizing and quenching. Lastly, as a finishing process, for example, there are performed grinding of the spherical outer peripheral surface and the spherical inner peripheral surface of the base material after the heat treatment or cutting of surfaces facing each other in an axial direction of the pocket. In this manner, the base material is completed as a cage.

In the pocket of the cage manufactured in this manner, the pair of surfaces facing each other in the axial direction functions as rolling surfaces for the torque transmission ball, and hence undergoes the finishing process as described above. Meanwhile, in general, another pair of surfaces facing each other in a peripheral direction of the pocket generally does not undergo the finishing process in terms of manufacturing-cost reduction and the like. That is, in this case, a shear surface formed through a pressing process is left in at least part of the pocket of the cage.

However, when being used at high operating angle, the constant velocity universal joint incorporating the cage as described above is deteriorated in strength in some cases.

Thus, in order to overcome the strength deterioration of the cage, in Patent Literature 1 below, there has been suggested that medium-carbon steel is used as a base material and the entire base material is hardened through quenching after pockets are formed through the pressing process in the base material.

### Citation List

### Patent Literature

Patent Literature 1: JP 2006-226412 A

### Summary of Invention

### Technical Problems

However, the inventors of the present invention have found out the following: when the base material made of medium-carbon steel undergoes whole hardening quenching after pockets are formed through the pressing process in the base material, a secondary fracture portion is liable to be generated in the shear surface at a time of the pressing process in comparison with a case of using a base material made of low-carbon steel.

That is, in this case, stress is liable to concentrate on the above-mentioned secondary fracture portion, and hence there is still a risk that sufficient strength of the cage cannot be secured.

Such a problem derives from the secondary fracture portion formed in the shear surface of the pocket. Thus, for example, when generation of the secondary fracture portion is prevented by formation of the pockets themselves through a cutting process, the problem can be probably solved. However, in this case, in comparison with the case of forming the pockets of the cage through the pressing process, a manufacturing step for the cage is forced to involve troublesome and complicated operation, with the result of leading to an unreasonably sharp increase in manufacturing cost for the cage. Thus, the formation of the pockets themselves through a cutting process practically cannot be taken as a countermeasure.

Accordingly, in terms of achieving cost reduction of the cage, it is important to form the pockets through the punch-pressing process in the base material made of medium-carbon steel. Further, it is important to leave the shear surface as a result of the pressing process as much as possible on the cage as a finished product so that unnecessary finishing processes are omitted. Thus, cost reduction of the cage is achieved on the premise that the secondary fracture portion formed in the shear surface of the pocket at the time of the pressing process is left in the cage as a finished product.

Accordingly, in order to achieve both cost reduction and strength enhancement of the cage, it is necessary to appropriately manage the secondary fracture portion formed in the shear surface of the pocket at the time of the pressing process. However, conventionally, the actual circumstances are that no countermeasure is taken in the above-mentioned terms.

Under the circumstances, it is a technical object of the present invention to achieve both the cost reduction and the strength enhancement of the cage by appropriately managing, at a time of forming the pockets through the punch-pressing process in the base material made of medium-carbon steel, the secondary fracture portion formed in the shear surface of the base material.

### Solution to Problems

The present invention, which has been made to solve the above-mentioned problems, provides a cage for a constant velocity universal joint, the cage being formed by forming, in a peripheral direction of a cylindrical base material made of medium-carbon steel, a plurality of pockets for rollably accommodating torque transmission balls through a punch-pressing process, and hardening the entire base material through heat treatment of quenching, the cage comprising a shear surface left in at least part of each of the plurality of pockets as a result of the punch-pressing process, the shear surface comprising a secondary fracture portion formed therein at a time of the punch-pressing process, in which, in the secondary fracture portion in cross-section orthogonal to the shear surface, a segment AB is 1.0 mm or less in a case where a secondary-fracture distal end portion is represented by A and a foot of a perpendicular from the secondary-fracture distal end portion to the shear surface is represented by B.

With this structure, in terms of cost reduction, even when the plurality of pockets of the cage are formed through the pressing process and the shear surface as a result of the pressing process is left on the cage, strength of the cage can be reliably enhanced for the following reason.

That is, the inventors of the present invention have found out the following: when the plurality of pockets are formed through the punch-pressing process, regarding the secondary fracture portion generated in the shear surface, the strength of the cage can be reliably enhanced through management in which a depth of the secondary fracture portion is used as an evaluation criterion factor. In detail, the inventors of the present invention have found out the following: as described above, in the case where the distal end portion of the secondary fracture portion is represented by A and the foot of the perpendicular from the distal end portion to the shear surface is represented by B, the strength of the cage can be reliably enhanced through management of evaluation of the secondary fracture portion based on a length of the segment AB within an appropriate range.

Specifically, the inventors of the present invention have found out the following: when the segment AB is 1.0 mm or less, the strength of the cage can be reliably enhanced, and sufficient durability of the cage can be secured even when a constant velocity universal joint incorporating the cage is used at high operating angle. Accordingly, in this case, the shear surface formed through the punch-pressing process can be left in the plurality of pockets of the cage as a finished product, and the sufficient strength of the cage can be secured while cost reduction is achieved. In other words, the strength of the cage can be reliably enhanced only when the segment AB defined in cross-section of the secondary fracture portion falls within the above-mentioned numerical value range. Such an advantage cannot be obtained when the segment AB departs from the above-mentioned numerical value range.

In the above-mentioned structure, it is preferred that, in the secondary fracture portion in the cross-section orthogonal to the shear surface, at least one of a segment AC and a segment AD be 1.3 mm or less in a case where intersections at which the secondary fracture portion expanding in two directions from the secondary-fracture distal end portion intersect the shear surface are represented by C and D, respectively.

With this, the secondary fracture portion is made further appropriate, which is advantageous in securing the strength of the cage.

In the above-mentioned structure, it is preferred that the base material contain C: 0.44 to 0.55 weight% prior to the heat treatment, and be set to have a core-portion hardness of 45 HRC or more after the heat treatment, the core-portion hardness being equal to or smaller than a surface-layer-portion hardness.

That is, when a carbon amount of the base material is less than 0.44 weight%, it is difficult to enhance surface hardness through heat treatment of whole hardening quenching, which leads to a risk of marked durability deterioration of a ball-contact surface. Further, when the carbon amount of the base material exceeds 0.55 weight%, press workability is markedly deteriorated. Accordingly, as a base material, it is preferred to use one having a carbon amount within the above-mentioned numerical value range prior to heat treatment. In addition, the reason why the base material prior to the heat treatment is used so as to set the core-portion hardness of the base material (cage) after the heat treatment to 45 HRC or more is that a hardness required for the core portion of the cage is secured, and the reason why the core-portion hardness is set to be equal to or smaller than the surface-layer-portion hardness is to prevent quenching cracks.

In the above-mentioned structure, it is preferred that the base material contain Si: 0.02 to 0.12 weight%, Mn: 0.3 to 0.6 weight%, Cr: 0.04 weight% or less, P: 0.02 weight% or less, S: 0.025 weight% or less, Ti: 0.005 to 0.1 weight%, and B: 0.0003 to 0.006 weight% prior to the heat treatment.

With this, contents of Si, Mn, and Cr are smaller than those of steel for mechanical structures (JIS G4051:2005), and hence workability is enhanced. Thus, it is possible to reduce a risk of generation of the secondary fracture portion in the shear surface due to the punch-pressing process. Further, the base material contains B, and hence grain-boundary strength is enhanced, which is advantageous in strength enhancement of the cage.

In the above-mentioned structure, it is preferred that a grain-boundary oxidized layer generated through the heat treatment have a depth of 10 µm or less. Note that, the "grain-boundary oxidization" herein represents selective oxidization on a grain boundary as a result of intrusion of oxygen along the grain boundary.

That is, when the depth of the grain-boundary oxidized layer generated through heat treatment exceeds 10 µm, surface cracks are liable to occur from the grain-boundary oxidized layer, and the strength is deteriorated in proportion to the depth of the grain-boundary oxidized layer. Thus, in terms of strength enhancement of the cage, it is preferred to set the depth of the grain-boundary oxidized layer generated through heat treatment to fall within the above-mentioned numerical value range.

In the above-mentioned structure, it is preferred that a decarburized layer be formed on a surface layer portion of the shear surface.

With this, the surface layer portion of the shear surface is softened by the decarburized layer, and hence stretchability of the secondary fracture portion formed in the shear surface can be reduced. In this case, it is preferred that a thickness of the decarburized layer be set within a range of from 0.05 to 0.15 mm. Within the numerical value range, the decarburized layer is removed through a post-processing from each of the contact surfaces of the plurality of pockets of the cage, which come into contact with the bolls. Thus, durability is not deteriorated. Note that, similarly, with provision of the decarburized layer within the numerical value range, for example, also from an outer peripheral surface of the cage, which comes into contact with an outer joint member, and from an inner peripheral surface of the cage, which comes into contact with an inner joint member, the decarburized layers are removed by the post-processing. Thus, durability deterioration is not involved.

In the above-mentioned structure, it is preferred that the plurality of pockets comprise eight or more pockets.

That is, owing to the larger number of pockets, sectional areas of wall portions separating the plurality of pockets adjacent to each other in the peripheral direction of the cage are reduced. Thus, strength enhancement of the cage is more important. Accordingly, in this case, the above-mentioned functions and advantages of the present invention are more effective.

The present invention, which has been made to solve the above-mentioned problems, provides a constant velocity universal joint including: the cage having the above-mentioned structure as needed; an outer joint member provided with a plurality of track grooves formed in an inner peripheral surface thereof; an inner joint member provided with a plurality of track grooves formed in an outer peripheral surface thereof; and a plurality of torque transmission balls for transmitting torque between the outer joint member and the inner joint member, in which, under a state of being incorporated one-by-one between the plurality of track grooves of the outer joint member and the plurality of track grooves of the inner joint member which are in pairs, the plurality of torque transmission balls are each rollably accommodated in a pocket of the cage.

With this structure, the functions and advantages that have already described can be similarly obtained.

### Advantageous Effects of Invention

As described above, according to the present invention, both cost reduction and strength enhancement of the cage can be achieved because, at the time of forming the plurality of pockets through the punch-pressing process in the base material made of medium-carbon steel, a size of the secondary fracture portion formed in the shear surface of the base material is appropriately managed.

### Brief Description of Drawings

[Fig. 1] A schematic axial sectional view of a constant velocity universal joint according to an embodiment of the present invention.
[Fig. 2 (a)] A plan view of a cage in which a torque transmission ball is accommodated in a pocket in a state of Fig. 1.
[Fig. 2(b)] A sectional view perpendicular to an axis, illustrating the cage in which the torque transmission ball is accommodated in the pocket in the state of Fig. 1.
[Fig. 3] A flow view showing a manufacturing step for the cage according to the embodiment.
[Fig. 4] A sectional view perpendicular to the axis, illustrating the cage according to the embodiment.
[Fig. 5] An enlarged view of a region X of Fig. 4.
[Fig. 6] A graph showing results of a first evaluation test according to an example of the present invention.
[Fig. 7] A graph showing results of a second evaluation test according to an example of the present invention.

### Description of Embodiment

In the following, description is made an embodiment of the present invention with reference to accompanying drawings.

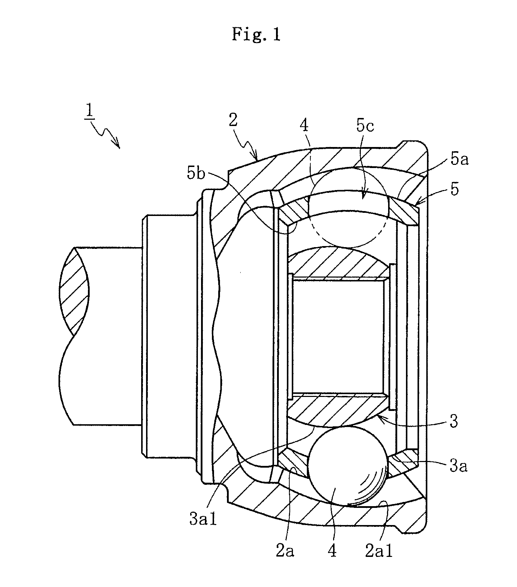

Fig. 1 illustrates a constant velocity universal joint according to the embodiment of the present invention, exemplifying a ball fixed type constant velocity universal joint (BJ). Note that, the present invention is applicable also to constant velocity universal joints of other types, such as a double offset type constant velocity universal joint (DOJ) and a lobro-type constant velocity universal joint (LJ).

The constant velocity universal joint 1 includes, as main components, an outer joint member 2, an inner joint member 3, torque transmission balls 4, and a cage 5.

The outer jointmember 2 has a spherical inner-peripheral surface 2a, the spherical inner-peripheral surface 2a being provided with a plurality of axially extending track grooves 2a1 formed in a peripheral direction.

The inner joint member 3 has a spherical outer-peripheral surface 3a, the spherical outer-peripheral surface 3a being provided with a plurality of axially extending track grooves 3a1 in fixed intervals in a peripheral direction.

The track grooves 2a1 of the outer joint member 2 are provided with as many as track grooves 3a1 of the inner joint member 3, and the torque transmission balls 4 are incorporated one-by-one between the track grooves 2a1 and 3a1 which are in pairs.

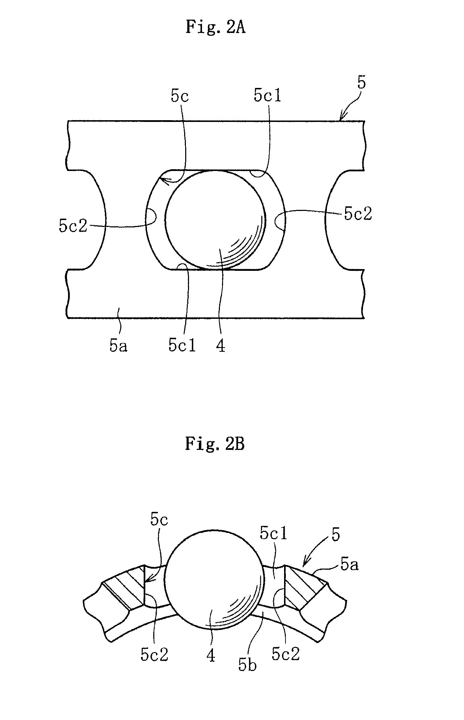

The cage 5 exhibits a cylindrical shape having a spherical outer-peripheral surface 5a and a spherical inner-peripheral surface 5b, and is provided with a plurality of pockets 5c formed in a peripheral direction as illustrated in Figs. 2(a) and 2(b). The cage 5 is arranged between the spherical inner-peripheral surface 2a of the outer joint member 2 and the spherical outer-peripheral surface 3a of the inner joint member 3. In this state, the torque transmission balls 4 incorporated between the track grooves 2a1 of the outer joint member 2 and the track grooves 3a1 of the inner joint member 3 which are in pairs are rollably accommodated in the pockets 5c of the cage 5. In this case, a pair of surfaces 5c1 facing in an axial direction of the pocket 5c are formed to be parallel with each other, and designed to function as rolling surfaces for the torque transmission ball 4.

In the following, of the components of the constant velocity universal joint 1 described above, detailed description is made of the cage 5 which has structural characteristics and a manufacturing method therefor.

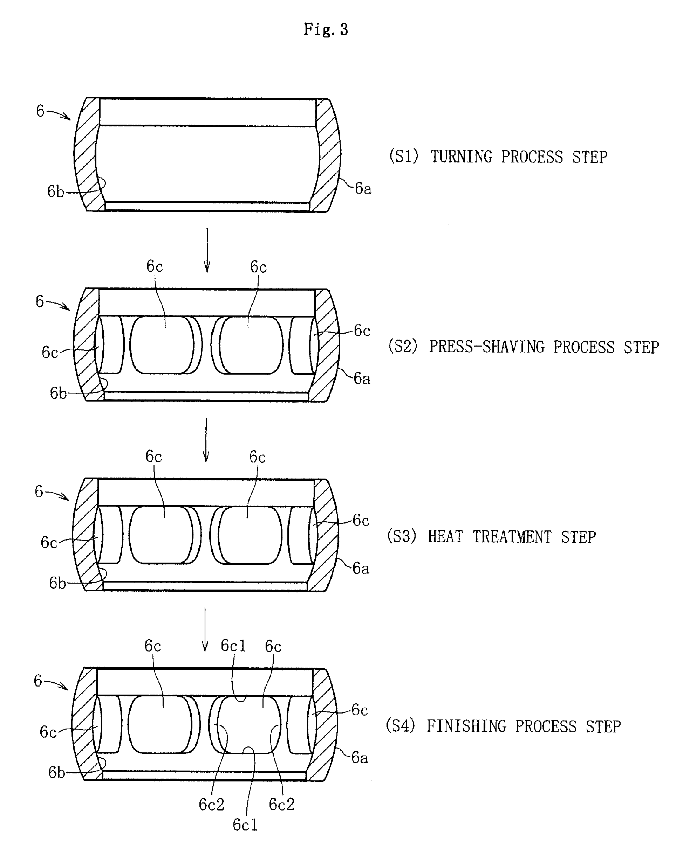

As illustrated in Fig. 3, a manufacturing step for the cage 5 according to the embodiment of the present invention includes a turning process step S1 of forming a spherical outer-peripheral surface 6a and a spherical inner-peripheral surface 6b by turning an outer peripheral surface and an inner peripheral surface of a cylindrical base material 6 made of medium-carbon steel, a press-shaving process step S2 of forming a plurality of (equal to or more than eight, for example) pockets 6c in a peripheral direction through punch-pressing of the base material 6, a heat treatment step S3 of quenching and annealing on the entire base material 6 provided with the pockets 6c, and a finishing process step S4 of grinding the spherical outer-peripheral surface 6a and the spherical inner-peripheral surface 6b of the base material 6 after heat treatment and grinding a pair of surfaces 6c1 facing each other in an axial direction of the base material. Note that, in the finishing process step S4, of the pocket 6c of the base material 6, a pair of surfaces 6c2 facing each other in a peripheral direction of the base material does not undergo grinding, and is left as shear surfaces after the pressing process. Further, in place of the turning process step S1, there may be performed a rolling process step of processing the outer peripheral surface and the inner peripheral surface of the base material 6 through rolling into the spherical outer-peripheral surface 6a and the spherical outer-peripheral surface 6a.

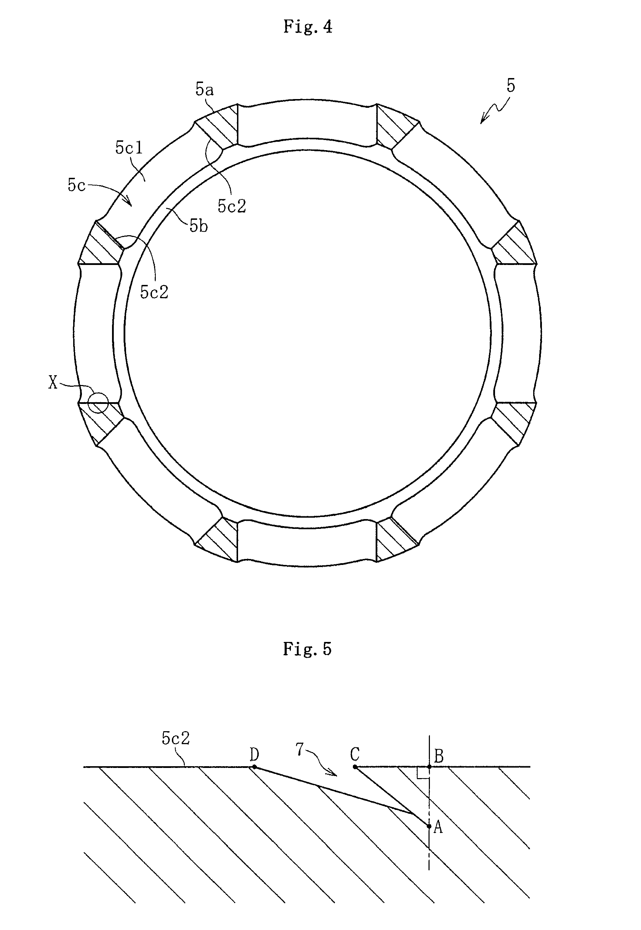

As illustrated in Fig. 4, in the cage 5 thus manufactured, it is common that, although the pair of surfaces 5c1 facing each other in a cage axial direction of the pocket 5c undergoes grinding, a pair of surfaces 5c2 facing each other in a cage peripheral direction of the pocket 5c does not undergo grinding as a finishing process step. This is because the finishing process is minimized, thereby achieving cost reduction of the cage 5.

As a result, in the pocket 5c, the shear surfaces formed through the pressing process are left as the pair of surfaces 5c2 facing each other in the cage peripheral direction. As illustrated in Fig. 5 in an enlarged manner, a secondary fracture portion 7 generated at a time of the pressing process exists in the shear surface 5c2. The secondary fracture portion 7 exhibits a wedge-like shape in cross-section orthogonal to the shear surface 5c2, and extends perpendicularly to an advancing direction (cage axial direction) of a punch used at the time of the pressing process, which constitutes a factor of strength deterioration of the cage 5.

In this context, in this embodiment, the size of the secondary fracture portion 7 is managed as follows. That is, as illustrated in Fig. 5, in the cross-section orthogonal to the shear surface 5c2, a segment AB is 1.0 mm or less and at least one of a segment AC and a segment AD is 1.3 mm or less in a case where: a distal end portion of the secondary fracture portion 7 is represented by A; a foot of a perpendicular from the secondary-fracture distal end portion to the shear surface 5c2 is represented by B; and intersections at which the secondary fracture portion 7 expanding in two directions from the secondary-fracture distal end portion intersect the shear surface 5c2 are represented by C and D, respectively.

Note that, unlike the illustration in Fig. 5, when a coupling portion of the secondary fracture portion 7 and the shear surface 5c2 is not sharp-pointed but exhibits a circular-arc shape and the like by chipping and the like, in the cross-section orthogonal to the shear surface 5c2, management is performed as described above on the premise that intersections on extended lines obtained by virtual extension of the secondary fracture portion 7 and the shear surface 5c2 are the intersections C and D of the secondary fracture portion 7 and the shear surface 5c2.

When the secondary fracture portion 7 is managed in this manner, the cage 5 is reliably prevented from fracturing from the secondary fracture portion 7, and sufficient durability of the cage 5 can be secured even when the constant velocity universal joint 1 incorporating the cage 5 is used at high operating angle. Accordingly, in this case, the shear surface 5c2 formed through the punch-pressing process can be left in the pockets 5c of the cage 5 as a finished product, and sufficient strength of the cage 5 can be secured while cost reduction is achieved. Note that, although such functions and advantages can be obtained merely when the segment AB falls within the above-mentioned numerical value range, in addition to this condition, the functions and advantages can be more reliably obtained when at least one of the segment AC and the segment AD falls within the above-mentioned numerical value range. Thus, it is practically preferred to satisfy both the conditions.

A specific example of the management method for the secondary fracture portion 7 as described above is as follows. One or a plurality of cages 5 are selected from each different group defined by manufacturing conditions of cages 5, and the selected cages 5 are cut in the cross-section orthogonal to the shear surface 5c2. Then, the size (segment AB, segment AC, and segment AD) of the secondary fracture portion 7 in the shear surface 5c2 formed in the pocket 5c is actually measured. Next, when the measured segment AB, segment AC, and segment AD satisfy the above-mentioned conditions, cages 5 grouped with a cage 5 satisfying the above-mentioned conditions are treated as non-defective products. Meanwhile, when the measured secondary fracture portion 7 does not satisfy the above-mentioned conditions, a manufacturing condition such as a pressing process condition is changed or adjusted. Specifically, for example, the manufacturing condition is changed or adjusted as follows: adjustment of a gap between a die and a punch used for the pressing process or replacement by a punch of higher durability.

Further, in this embodiment, the base material 6 contains C: 0.44 to 0.55 weight%, and is set to have a core-portion hardness of 45 HRC or more after the heat treatment step S3 the core-portion hardness being equal to or smaller than a surface-layer-portion hardness. With this, processability of the base material 6 can be enhanced and heat cracks at the time of heat treatment are prevented.

In this case, when the base material 6 further contains Si: 0.02 to 0.12 weight%, Mn: 0.3 to 0.6 weight%, Cr: 0.04 weight% or less, P: 0.02 weight% or less, S: 0.025 weight% or less, Ti: 0.005 to 0.1 weight%, and B: 0.0003 to 0.006 weight% prior to the heat treatment step S3, it is possible to further enhance processability of the base material 6, and to reduce a risk of generation of the secondary fracture portion 7 in the shear surface 6c2 (5c2) as a result of the punch-pressing process on the pockets 6c (5c). Further, the base material 6 contains B, and hence grain-boundary strength is enhanced, which is advantageous in strength enhancement of the cage 5.

In addition, in terms of prevention of surface fracture of the cage 5 of low strength, in the above-mentioned heat treatment step S3, control is effected so that a depth of a grain-boundary oxidized layer to be generated on the base material 6 (cage 5) is 10 µm or less.

Note that, decarburization treatment may be performed between the heat treatment step S3 and the finishing process step S4. With this, a surface layer portion of the base material 6 is softened, and hence grinding in the finishing process step S4 can be easily performed within a short period of time. In addition, a decarburized layer is left as it is on the pair of surfaces 5c2 facing each other in the cage peripheral direction of the pocket 5c that does not undergo the finishing process, and hence stretchability of the secondary fracture portion 7 can be reduced. Note that, in the pocket 5c, the pair of surfaces 5c1 constituting the rolling surfaces for the torque transmission balls 4 is required to have a surface hardness, and hence it is preferred to set the thickness of the decarburized layer formed through the decarburization treatment to be 0.15mm or less, which allows removal through grinding. Further, in terms of reduction in stretchability of the secondary fracture portion 7 of each of the pair of surface 5c2 facing each other in the peripheral direction of the cage 5, it is preferred to set the thickness of the decarburized layer formed through the decarburization treatment to be 0.05 mm or more. That is, in the cage 5 as a finished product, it is preferred that a decarburized layer having a thickness within a range of from 0.05 mm to 0.15 mm be formed on the pair of surfaces (shear surfaces) 5c2 facing each other in the peripheral direction of the cage 5.

Further, between the press-shaving process step S2 and the heat treatment step S3, a soft milling process may be performed on the pair of surfaces 6c1 facing each other in the axial direction of the base material in the pocket 6c of the base material 6, and a hard milling process may be performed on the surfaces 6c1 in the finishing process step S4 after heat-treatment hardening. In this case, the soft milling process represents a milling process onmembers prior to heat-treatment hardening, and the hard milling process represents a milling process on members after heat-treatment hardening. With this, for example, in comparison with a case of performing a shaving process (cutting process on a surface-to-be-pressed with use of a bar-like cutting tool with a flange-like blade) between the press-shaving process step S2 and the heat treatment step S3, higher dimensional accuracy can be achieved, and variation of a dimensional change at the time of the heat treatment can be suppressed. Thus, a cutting margin in the hard milling in the finishing process step S4 can be reduced, which is advantageous in achieving cost reduction. As a matter of course, only the hard milling process may be performed without the soft milling process in the finishing process step S4, which is markedly advantageous in terms of cost reduction.

In addition, in the heat treatment step S3, when quenching and annealing are performed on the entire base material 6 provided with the pockets 6c, it is preferred to perform heating treatment within a short period of time. Specifically, it is preferred to perform heating treatment at 950°C within 50 seconds. With this, unlike a case of performing long-time heating such as normal carburizing and quenching, grain-boundary strength is prevented from being reduced owing to coarsening.

According to the cage 5 in this embodiment and the constant velocity universal joint 1 incorporating the cage 5 as described above, even when the pockets 5c are formed through the pressing process and the shear surfaces 5c2 thereof are left in part of the cage 5 as a finished product in terms of cost reduction, the size of the secondary fracture portion 7 formed in each of the shear surface 5c2 is properly managed, and hence both cost reduction and strength enhancement of the cage 5 can be achieved. Thus, sufficient strength of the constant velocity universal joint 1 incorporating the cage 5 can be secured even in use at the high operating angle.

### Example

For verification of the effectiveness of the present invention, the following evaluation tests were carried out. Note that, in the following, for the sake of convenience in description, a value of the segment AB is represented by h, and a value of smaller one of the segment AC and the segment AD is represented by t.

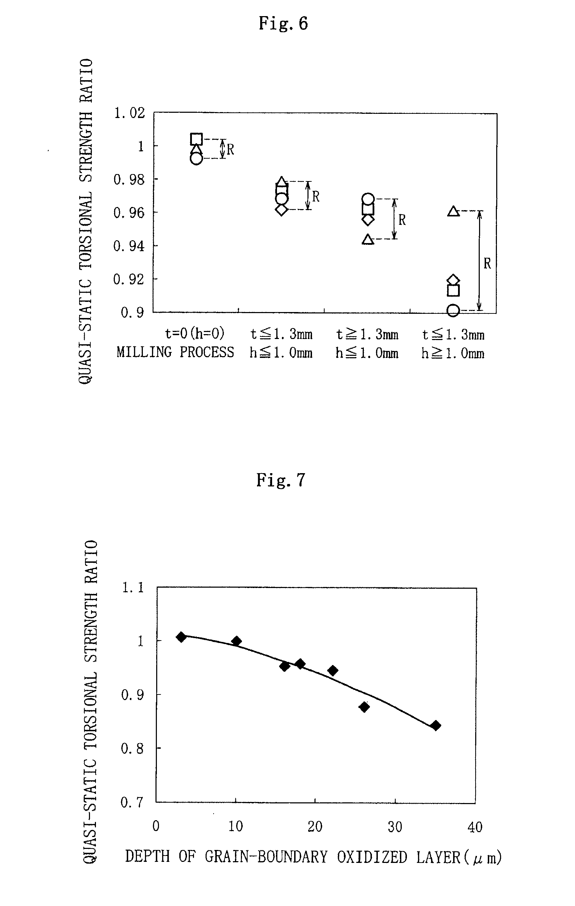

First, in a first evaluation test, evaluation was made of strength of the cage in which values h and t were different from each other through a quasi-static torsional test. Specifically, an average value of the quasi-static torsional test of a milling process object (h=0 and t=0) was 1, and evaluation was made of a magnitude of a quasi-static torsional strength ratio of h and t and strength variation. Fig. 6 shows the results of the evaluation. Note that, in the graph, the strength variation is represented by R (difference between a maximum quasi-static torsional strength ratio and a minimum quasi-static torsional strength ratio).

The graph confirms that, when h > 1.0 mm is satisfied, strength reduction and strength variation are significant in comparison with those of the milling process object. Meanwhile, when h ≤ 1.0mm is satisfied, the variation of strength approximately is halved, which confirms that overall strength is enhanced. In addition, when both h ≤ 1.0 mm and t ≤ 1.3 mm are satisfied, this tendency becomes more significant, which confirms that both the strength and the variation thereof are more preferred.

Those results prove that it is preferred to manage the cage so that the size of the secondary fracture portion satisfies h ≤ 1.0 mm, and more preferred to manage the cage so that the size of the secondary fracture portion satisfies both h ≤ 1.0 mm and t ≤ 1.3 mm.

Next, as a second evaluation test, evaluation was made of a relation between the depth of the grain-boundary oxidized layer generated through heat treatment and the strength of the cage. In the evaluation test, quasi-static torsional strength is set to be 1 when the depth of the grain-boundary oxidized layer is approximately 10 µm, and relative evaluation was made of quasi-static torsional strength at other depths of the grain-boundary oxidized layer. Fig. 7 shows the results of the relative evaluation.

The graph confirms that, although there is a tendency that the strength is reduced as the depth of the grain-boundary oxidized layer increases, the tendency of strength reduction is significantly gradual when the depth of the grain-boundary oxidized layer is 10 µm or less. Thus, in terms of strength enhancement of the cage, it is preferred to set the depth of the grain-boundary oxidized layer generated through heat treatment to be 10 µm or less.

### Reference Signs List

- 1: constant velocity universal joint
- 2: outer joint member
- 3: inner joint member
- 4: torque transmission ball
- 5: cage
- 5c: pocket
- 5cl: rolling surfaces (surfaces facing each other in cage axial direction of pocket)
- 5c2: shear surfaces (surfaces facing each other in cage peripheral direction of pocket)
- 7: secondary fracture portion
- A: secondary-fracture distal end portion
- B: foot of perpendicular from secondary-fracture distal end portion to shear surface 5c2
- C, D: intersection of secondary fracture portion and shear surface

## Claims

1. A cage for a constant velocity universal joint,
the cage being formed by
forming, in a peripheral direction of a cylindrical base material made of medium-carbon steel, a plurality of pockets for rollably accommodating torque transmission balls through a punch-pressing process, and
hardening the entire base material through heat treatment of quenching,
the cage comprising a shear surface left in at least part of each of the plurality of pockets as a result of the punch-pressing process, the shear surface comprising a secondary fracture portion formed therein at a time of the punch-pressing process,
wherein, in the secondary fracture portion in cross-section orthogonal to the shear surface, a segment (AB) is 1.0 mm or less in a case where a secondary-fracture distal end portion is represented by A and a foot of a perpendicular from the secondary-fracture distal end portion to the shear surface is represented by B.

2. A cage for a constant velocity universal joint according to claim 1, wherein, in the secondary fracture portion in the cross-section orthogonal to the shear surface, at least one of a segment (AC) and a segment (AD) is 1.3 mm or less in a case where intersections at which the secondary fracture portion expanding in two directions from the secondary-fracture distal end portion intersect the shear surface are represented by C and D, respectively.

3. A cage for a constant velocity universal joint according to claim 1, wherein the base material contains C: 0.44 to 0.55 weight% prior to the heat treatment, and is set to have a core-portion hardness of 45 HRC or more after the heat treatment, the core-portion hardness being equal to or smaller than a surface-layer-portion hardness.

4. A cage for a constant velocity universal joint according to claim 1, wherein the base material contains Si: 0.02 to 0.12 weight%, Mn: 0.3 to 0.6 weight%, Cr: 0.04 weight% or less, P: 0.02 weight% or less, S: 0.025 weight% or less, Ti: 0.005 to 0.1 weight%, and B: 0.0003 to 0.006 weight% prior to the heat treatment.

5. A cage for a constant velocity universal joint according to claim 1, wherein a grain-boundary oxidized layer generated through the heat treatment has a depth of 10 µm or less.

6. A cage for a constant velocity universal joint according to claim 1, wherein a decarburized layer is formed on a surface layer portion of the shear surface.

7. A cage for a constant velocity universal joint according to claim 1, wherein the plurality of pockets comprise eight or more pockets.

8. A constant velocity universal joint, comprising:
the cage according to claim 1;
an outer joint member provided with a plurality of track grooves formed in an inner peripheral surface thereof;
an inner joint member provided with a plurality of track grooves formed in an outer peripheral surface thereof; and
a plurality of torque transmission balls for transmitting torque between the outer joint member and the inner joint member,
wherein, under a state of being incorporated one-by-one between the plurality of track grooves of the outer joint member and the plurality of track grooves of the inner joint member which are in pairs, the plurality of torque transmission balls are each rollably accommodated in a pocket of the cage.
